# EUROPEAN PATENT SPECIFICATION

(11) **EP 1 031 409 B1**
(45) Date of publication and mention of the grant of the patent: **12.01.2005**
(21) Application number: 99101442.4
(22) Date of filing: 27.01.1999
(51) Int. Cl.: B32B 17/10

(54) **Method of manufacturing lightweight glazing by multilayer glass/plastic sheets**
Verfahren zur Herstellung von Leichtverglasungen unter Verwendung von mehrschichtigen Glas/Kunstoff-Verbünden
Procédé de fabrication d'une structure légère en verre utilisant des composites multi-couches en matière verre/plastique

(43) Date of publication of application: 30.08.2000
(73) Proprietor: Ford Global Technologies, LLC, Dearborn, MI 48126 (US)
(72) Inventor: Doerfler, Thomas, 50374 Erftstadt (DE)
(74) Representative: Drömer, Hans-Carsten, Dipl.-Ing.

(56) References cited:
- EP-A- 0 245 175
- EP-A- 0 669 205
- DE-U- 29 510 400
- FR-A- 2 750 075
- GB-A- 1 184 042
- US-A- 4 579 448
- US-A- 4 600 640

## Description

The present invention relates to a method of manufacturing glazing by multilayer glass/plastic sheets as lightweight glazing for automotive applications.

At present four main types of automotive glazing are of interest for weight reduction: (1) overall reduced thickness of the glass, (2) bi-layer laminated glass/plastic sheet, (3) plastic sheets with hard and scratch resistant coating, (4) multilayer glass/plastic glazing.

Weight reduction by reduced overall glass thickness is limited because of manufacturing, noise and security requirements: The glass pane must be manageable during the whole manufacturing process. The manufacturing process for laminated windshields disclosed in EP 0 245 175 B1 will allow only slight reduction in thickness. Furthermore thickness reduction will increase the interior noise level. Thinner glass transforms windnoise as well as body vibrations more directly to the interior. That means also sidelites, mostly affected by windnoise, are limited with regard to thickness reduction. At last all glazing must withstand security requirements. This requires a certain thickness of glazing all around the vehicle.

To overcome the situation described above one approach is to build glazing from bi-layer sheets made from glass and plastic. Main disadvantage is the minor scratch resistance of the plastic surface, which is not satisfying for automotive applications at the moment.

Lightweight glazing could also be achieved by fully plastic sheets, covered with scratch resistant surfaces. Several disclosures are dealing with the subject, but at the moment none of these technologies has been introduced on high volume products.

A very efficient approach for lightweight glazing is a "Sandwich" glazing with a multilayer sheet: Two thin glass layers, one inner and one outer, combined with a thick middle layer made of plastic. Disadvantage at the moment is the manufacturing process. Handling of the thin glass layers is very difficult, that means size of sheets is limited, especially for curved panes.

Such a multilayer sheet is disclosed in EP 0669205. The sheets are provided either as flat plates or as curved panels. The manufacturing process discussed for curved panels uses preformed inner and outer glass layers, which are either bonded together with a plastic layer in the middle or are filled with melted plastic to create the middle plastic layer. But, as both glass layers are very thin and therefore subjected to breakage, handling of the pre-curved glass layers is even more difficult as it is for the flat glass layers of the flat panels.

Therefore, it is a primary object of the present invention to provide a method of manufacturing lightweight automotive glazing based on the Sandwich approach with multilayer sheets with none of the above mentioned drawbacks.

According to the present invention, there is provided a method of manufacturing multilayer glass/plastic panes for lightweight automotive glazing according to claim 1, comprising:
a multilayer sheet with thin inner and outer glass layers, both layers have 1/5 or less of total sheet thickness, to face inside and outside the vehicle;
a thermoplastic layer in between said glass layers joined by bonding or welding to the glass layers;
a raw sheet manufactured as flat plate;
a pre-bending stress incorporated in each flat glass layer to avoid residual bending stresses in the final curved glass layers;
a bending process to match curved shapes of automotive glazing by using thermal deformation of the thermoplastic layer;
a post heat treatment of the final panel to strengthen the glass layers by incorporating compression stresses in the glass layers.

The above and other objects, features and advantages of the present invention will become more apparent from the following description when taken into conjunction with the accompanying drawings.
- FIG. 1: is a cross-sectional view on the single flat raw layers and the pre-bending stresses in the glass layers.
- FIG 2: is a cross-sectional view of the flat pane in a mould and the stresses in each layer.
- Fig. 3: is a cross-sectional view of the pane bent to it's final shape in the mould and the resulting stresses.
- Fig. 4: is a cross-sectional view on the finished pane showing the final cutting lines of the pane's edges and incorporated compression stresses in the glass layers.

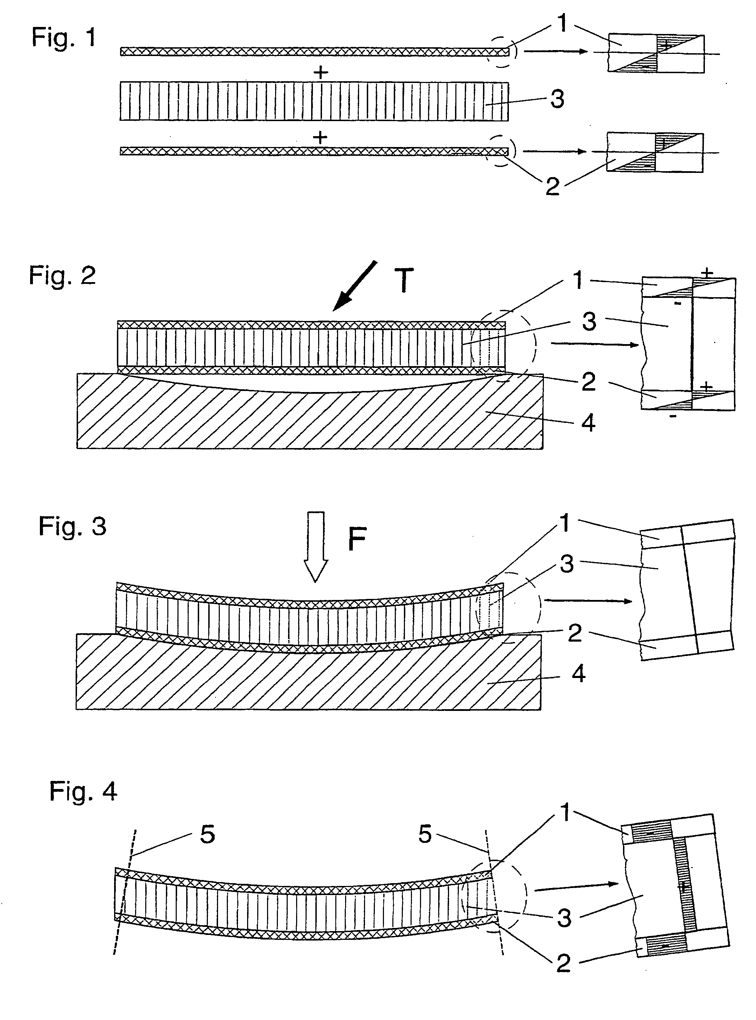

Figure 1 shows the structural principle of the new compound before the manufacture with inner glass layer 1, outer glass layer 2 and the middle thermoplastic layer 3. All three layers are joined either by an additional film of adhesive between each layer or by welding both glass layers to the thermoplastic layer by melting the plastic of the thermoplastic layer.

For handling and process reasons such a structure is to be manufactured as flat plate. Therefore all raw sheets are flat before joining.

To avoid residual bending stresses in the glass layers after bending to their final shape, pre-bending stresses are incorporated in the glass layers as it is done for tempered glass. Principal stress distribution is also shown in figure 1.

For further work an initial pane is cut out of the flat sheet for further forming.

Next step is the bending of the initial pane in a mould 4 as shown in Figure 2. The whole pane is heated to the glass temperature T of the thermoplastic layer. Both glass layers are not affected from thermal deformation because their glass temperature is much higher.

Then a load F is applied to fit the pane to the mould 4, see Figure 3. The load can be gravity load, heated air streams or anything other applicable.

Under such conditions bending of the pane results mainly from the shear deformation of the thermoplastic layer 3 due to it's thermal weakness. Both glass layers 1, 2 can not act as counterparts like the flanges on an H-beam, because of the shear weakness of the middle layer 3. Their only contribution to bending stiffness is the bending stiffness of each single glass layer. Due to the low thickness of the glass proposed here bending radii of less than 1 m could be achieved without exceeding strength of the glass.

Stress distribution before and after bending are shown both in Figure 2 and 3:

Before bending the pre-bending stresses in both glass layers are as shown in Figure 2. Stresses from the resulting counter bending moment to achieve static equilibrium of bending moments are neglected because of the much higher bending stiffness of the complete pane which is acting as a structural Sandwich.

After bending the pre-bending stresses in both glass layers disappear, see Figure 3. Also no shear and bending stresses results in the plastic layer because of complete plastic thermal deformation.

In some cases, especially if there is a slight crown in the pane, shell stresses may appear somewhere in the glass layers. Then local heat can be applied on the glass layers for a very short time at these high stressed areas so that stress peaks can be reduced by plastic thermal deformation.

Last step of the process as shown in Figure 4 is cutting the edges of the pane to it's final shape. As can be seen at the cutting lines 5 the cut off from the inner glass layer 1 is longer than the cut off from the outer glass layer 2, which is a result of the said shear bending.

To achieve a better strength of the glass surface a compression stress can be introduced in both glass layers during cooling the pane. When heated and cooled in a defined way, the plastic layer is drawing more than the glass layers which induces a favourable compression stress to the glass. Final stress distribution is also shown in Figure 4.

## Claims

1. A method of manufacturing multilayer glazing sheets for automotive applications with an outer and inner layer (1,2) with very thin glass, each 1/5 or less of total sheet thickness, to face outside and inside the vehicle; and a thermoplastic layer (3) between the glass layers with specific weight less than glass to achieve overall weight reduction, with all layers bonded together by two additional films of adhesive, one between inner glass and plastic layer and one between outer glass and plastic layer, or with the glass layers (1, 2) joined to the thermoplastic layer (3) by melting of the thermoplastic layer (3), whereby a raw sheet is manufactured as flat plate,
**characterised by** the following bending process:
- The flat pane is heated to process temperature which is glass temperature of plastic layer (3),
- bending curvature of final shape is applied, whereby bending of the pane is a result mainly of the plastic transverse shear deformation of the plastic layer (3) due to thermal deflection, and
- only elastic bending in glass layers, (1,2) but no plastic deformation occurs because process temperature is far below glass temperature of glass.

2. A method according to claim 1, **characterised by** incorporating pre-bending stresses in both glass layers in such a way that bending stresses disappears in the glass layers (1, 2) after bending the sheet to its final shape.

3. A method according to claim 2, **characterised by** cutting the sheet to a preliminary shape of the pane.

4. A method according to claim 3, **characterised by** bending the flat pane in a mould by applied forces or gravity.

5. A method according to claim 1, **characterised by** heating glass layers (1,2) during bending locally to glass temperature of glass for a short time to achieve defined locally plastic deformation in the glass layers (1, 2).

6. A method according to claim 1 and 5, **characterised by** post heat treatment to achieve an overall compression stress in both glass layers (1, 2) by having different thermal expansions coefficients of glass and plastic layers.

## Patentansprüche

1. Verfahren zur Herstellung von mehrschichtigen Verglasungsverbünden für Kraftfahrzeuge mit einer äußeren und einer inneren Schicht (1, 2) aus sehr dünnem Glas, die jeweils maximal ein Fünftel der Gesamtverbunddicke ausmachen und die aus dem Fahrzeug heraus bzw. in das Fahrzeug hinein weisen, und einer zwischen den Glasschichten (1, 2) angeordneten Thermoplastschicht (3) mit einem geringeren spezifischen Gewicht als Glas, um eine Senkung des Gesamtgewichts zu erreichen, wobei alle Schichten durch zwei zusätzliche Klebstofffilme zusammengehaftet sind, und zwar ein Klebstofffilm zwischen der inneren Glasschicht und der Kunststoffschicht und der andere Klebstofffilm zwischen der äußeren Glasschicht und der Kunststoffschicht, oder wobei die Glasschichten (1, 2) mit der Thermoplastschicht (3) durch Schmelzen der Thermoplastschicht (3) verbunden sind, wodurch ein Rohverbund in Form einer flachen Platte hergestellt wird, **gekennzeichnet durch** das folgende Biegeverfahren:
- die flache Scheibe wird auf Verarbeitungstemperatur erwärmt, bei der es sich um die Glastemperatur der Kunststoffschicht (3) handelt;
- es wird eine Biegungskrümmung in Endform angelegt, wodurch das Biegen der Scheibe hauptsächlich ein Ergebnis der transversalen Kunststoffscherverformung der Kunststoffschicht (3) infolge der thermischen Auslenkung ist; und
- es kommt lediglich zu einem elastischen Verbiegen in den Glasschichten (1, 2), aber zu keiner plastischen Verformung, weil die Verarbeitungstemperatur weit unterhalb der Glastemperatur von Glas liegt.

2. Verfahren nach Anspruch 1, **gekennzeichnet durch** das Einbauen von Spannungen in beide Glasschichten vor dem Biegen, dergestalt, dass Biegespannungen in den Glasschichten (1, 2) verschwinden, nachdem der Verbund in seine Endform gebogen wurde.

3. Verfahren nach Anspruch 2, **gekennzeichnet durch** Schneiden des Verbundes zu einer vorläufigen Form der Scheibe.

4. Verfahren nach Anspruch 3, **gekennzeichnet durch** Biegen der flachen Scheibe in einem Gesenk **durch** angelegte Kräfte oder Schwerkraft.

5. Verfahren nach Anspruch 1, **gekennzeichnet durch** kurzzeitiges lokales Erwärmen der Glasschichten (1, 2) während des Biegens auf Glastemperatur von Glas, um eine definierte lokale plastische Verformung in den Glasschichten (1, 2) zu erreichen.

6. Verfahren nach Anspruch 1 und 5, **gekennzeichnet durch** nachträgliche Wärmebehandlung zum Erreichen einer Gesamtdruckspannung in beiden Glasschichten (1, 2) **durch** unterschiedliche thermische Ausdehnungskoeffizienten der Glas- und Kunststoffschichten.

## Revendications

1. Procédé de fabrication de composites de vitrage multi-couches pour des applications automobiles, comportant une couche externe et une couche interne (1, 2) constituées de verre très mince, représentant chacune 1/5 ou moins de l'épaisseur totale du composite, destinées à se trouver face à l'extérieur et face à l'intérieur du véhicule ; et une couche thermoplastique (3) située entre les couches de verre (1, 2), ayant un poids volumique spécifique inférieur à celui du verre pour produire une réduction globale du poids, toutes les couches étant collées les unes aux autres par deux films additionnels d'adhésif, l'un entre la couche de verre interne et la couche de plastique et l'autre entre la couche de verre externe et la couche de plastique, ou les couches de verre (1, 2) étant unies à la couche thermoplastique (3) par fusion de la couche thermoplastique (3), par lequel un composite brut est fabriqué sous la forme d'une plaque plate, **caractérisé par** le procédé de flexion ci-après :
- la plaque plate est chauffée jusqu'à une température de procédé qui est la température de transition vitreuse de la couche de plastique (3),
- la courbure par flexion correspondant à la forme finale est appliquée, dans laquelle la flexion de la plaque résulte essentiellement de la déformation plastique par cisaillement transversal de la couche de plastique (3) en raison du fléchissement thermique, et
- seulement une flexion élastique dans les couches de verre (1, 2), sans toutefois qu'une déformation plastique n'ait lieu, car la température de procédé est largement inférieure à la température de transition vitreuse du verre.

2. Méthode selon la revendication 1, **caractérisée par** l'incorporation de contraintes de pré-flexion dans les deux couches de verre, de façon à ce que les contraintes de flexion disparaissent dans les couches de verre (1, 2) après que le composite a été courbé jusqu'à sa forme finale.

3. Méthode selon la revendication 2, **caractérisée par** le découpage du composite pour obtenir une forme préliminaire de la plaque.

4. Méthode selon la revendication 3, **caractérisée par** la flexion de la plaque plate dans un moule par application de forces ou sous l'effet de la pesanteur.

5. Méthode selon la revendication 1, **caractérisée par** un bref chauffage local des couches de verre (1, 2) pendant la flexion, jusqu'à la température de transition vitreuse du verre, pour produire une déformation plastique locale définie dans les couches de verre (1, 2).

6. Méthode selon les revendications 1 et 5, **caractérisée par** un traitement post-chauffage visant à produire une contrainte de compression globale dans les deux couches de verre (1, 2) par le fait que les coefficients de dilatation thermique sont différents dans les couches de verre et de plastique.
